# DEMANDE DE BREVET EUROPEEN

(11) **EP 4 464 762 A1**
(43) Date de publication de la demande: **20.11.2024**
(21) Numéro de dépôt: 24175223.7
(22) Date de dépôt: 10.05.2024
(51) Int. Cl.: C10L 5/14, B01J 13/14, B09B 3/21, C10J 3/46, C10L 5/22, C10L 5/36, C10L 5/40, C10L 9/12, B01J 23/06, B01J 23/72, B01J 23/755, B09B 101/25, B09B 101/70, B09B 101/75, B09B 101/80, C10J 3/62

(54) **PROCÉDÉ DE MISE EN FORME D'UNE POUDRE DE BIOMASSE SOUS FORME DE BILLES**

(30) Priorité: 11.05.2023 FR 2304656
(71) Demandeur: Commissariat à l'Energie Atomique et aux Energies Alternatives, 75015 Paris (FR)
(72) Inventeur: DEMEY CEDENO, Hary, 38054 GRENOBLE CEDEX 09 (FR); DELATTRE, Olivier, 38054 GRENOBLE CEDEX 09 (FR); THIERY, Sébastien, 38054 GRENOBLE CEDEX 09 (FR); TRIPOLI, Carmelo, 38054 GRENOBLE CEDEX 09 (FR); CHATAING, Thierry, 38054 GRENOBLE CEDEX 09 (FR)
(74) Mandataire: Brevalex

(57) **Abrégé**

Procédé de traitement de la biomasse pour fabriquer des billes de biomasse adaptées pour une mise en oeuvre dans un procédé de gazéification, le procédé comprenant les étapes suivantes :
a) fournir une première solution contenant des algues et des carbonates, la première solution étant de préférence à une température comprise entre 30°C et 60°C moyennant quoi de l'alginate est formé,
b) ajouter une poudre de biomasse à la première solution, moyennant quoi on forme une deuxième solution, la taille des particules de la poudre de biomasse étant de préférence inférieure à 1000 µm,
c) ajouter goutte à goutte, par exemple au moyen d'un buse d'injection ayant de préférence un orifice de sortie de 1 mm à 20 mm de diamètre, la deuxième solution à un bain de coagulation ionotropique comprenant des ions divalents, moyennant quoi on forme des billes de biomasse adaptées pour une mise en oeuvre dans un procédé de gazéification.

## Description

### DOMAINE TECHNIQUE

La présente invention se rapporte au domaine général de la mise en forme de poudres issues de biomasses (brutes ou traitées par conversion thermochimique).

L'invention concerne un procédé de traitement de la biomasse et déchets pour les agglomérer sous forme de « billes ».

L'invention concerne également des billes de biomasse ainsi obtenues.

L'invention concerne également un procédé de gazéification de biomasse mettant en oeuvre de telles billes.

L'invention est particulièrement intéressante puisqu'elle permet de former des billes de biomasse de dimension calibrée et de forme quasi sphérique. Ces billes présentent de bonnes propriétés de coulabilité et peuvent être stockées sans risque d'explosion ou de compaction.

L'invention trouve des applications dans de nombreux domaines industriels, notamment pour la gazéification de la biomasse (par exemple poussières et autres déchets carbonés de taille fine dans l'industrie, par exemple dans l'industrie papetière) ou encore pour la production d'engrais.

### ÉTAT DE LA TECHNIQUE ANTÉRIEURE

Afin de faire face à la dépendance énergétique aux hydrocarbures fossiles, une des solutions les plus prometteuses est la production de gaz de synthèse (Syngaz) et de molécules d'intérêt à partir de la biomasse et/ou de déchets carbonés (ressource).

La valorisation de produits carbonés (biomasse et déchets) peut être effectuée par un procédé de gazéification (thermo-conversion) dans un réacteur à flux entraîné (RFE). Ce procédé consiste à gazéifier la ressource, typiquement à des températures allant de 900°C à 1400°C et des pressions allant de 1 à 30 bar, pour obtenir un gaz de synthèse composé essentiellement de monoxyde de carbone (CO), de dihydrogène (H₂) et de dioxyde de carbone (CO₂). A partir de CO et d'H₂, il est alors possible d'obtenir des chaînes d'hydrocarbures CH₂ semblables à celles provenant des hydrocarbures d'origine fossile et ainsi fabriquer un carburant de synthèse. Le carbone est ainsi valorisé sous forme de méthane ou de syngaz pour produire des carburants.

Le procédé de gazéification permet également de co-générer de la chaleur et de l'électricité.

Classiquement, avant de mettre en oeuvre l'étape de gazéification, la ressource est prétraitée mécaniquement, à travers une étape de broyage pour adapter la taille des particules au système de convoyage et d'injection des réacteurs de gazéification (typiquement inférieure à 2 mm). Cette étape est réalisée au moyen des différentes technologies de broyage, par exemple broyeur à couteaux, à marteaux, à chaine, etc. L'étape de broyage conduit également à la formation de particules fines de dimensions inférieures à 200 µm. Les poudres fines contenant des composants ligno-cellulosiques sont cohésives et allongées, ce qui conduit à des difficultés d'écoulement à cause de l'attraction électrostatique (forces de Van der Waals) entre les parois des réacteurs et la poudre. Ces fines particules, généralement difficiles à convoyer, augmentent aussi les risques ATEX (atmosphère explosive) et occasionnent des problèmes de blocage dans tout le système, conduisant à l'arrêt du procédé.

Pour éviter ces inconvénients, les particules fines (<200 µm) sont séparées des autres particules par des équipements de criblage industriel et elles ne sont en général peu ou pas valorisées.

Or, la fraction des fines peut ainsi représenter de 20% à 50% massique de la matière broyée (en fonction de la sévérité du broyage et de la friabilité de la ressource).

Il est donc essentiel de pouvoir valoriser cette poudre fine, par exemple en la transformant en granulés.

Afin de pouvoir être utilisés dans un réacteur de gazéification, les granulés doivent avoir un diamètre compris entre 200 µm et 3 mm. Les poudres fines de tailles de particules inférieures à 200 µm présentent des problèmes de blocage. Les poudres de dimensions supérieures à 3 mm ont de faibles rendements de thermo-conversion car les temps de séjour de l'intrant dans le réacteur sont courts (quelques secondes).

Différentes techniques existent pour former des granulés à partir de particules fines, notamment la granulation humide.

Par exemple, dans le document FR 3 059 008 A1, des granulés sont obtenus à partir d'un procédé de granulation humide de la biomasse. Le procédé comprend les étapes suivantes :
- séchage de la biomasse,
- broyage de la biomasse,
- granulation humide de la biomasse en présence d'un liant, notamment de l'amidon, moyennant quoi des granulés humides sont formés,
- séchage pour obtenir des granulés secs et, éventuellement, tamisage.

Les granulés sont ensuite injectés dans un réacteur de gazéification. Des résultats satisfaisants concernant la coulabilité des granulés ont été obtenus. Toutefois ce procédé présente quelques inconvénients : la taille des particules des granulés n'est pas homogène, d'où la mise en oeuvre d'une étape de tamisage (taille de tamis: 900 µm), et une étape de séchage est nécessaire (étalement en fines couches des granulés puis étuve à température ambiante pendant 8h), ce qui complexifie le procédé. De plus, les granulés se désagrègent facilement, ce qui représente un problème pour leur transport et convoyage dans les installations de gazéification.

Dans d'autres domaines techniques, notamment celui de l'industrie alimentaire ou de la pharmacie, il existe des procédés d'encapsulation pour former des billes à structure coeur liquide/coquille de gélifiant. Par exemple, dans le document FR 2 964 017 A1, le procédé comprend les étapes suivantes :
- convoyage séparé dans une double enveloppe d'une première solution liquide contenant le premier produit (principe actif) et d'une seconde solution liquide contenant un poly-électrolyte liquide à gélifier, par exemple de l'alginate,
- formation d'une série de gouttes comprenant chacune, un noyau central contenant le principe actif, et un film périphérique recouvrant entièrement le noyau central,
- une mise en contact de la goutte, formée dans un volume gazeux à la sortie de la double enveloppe, avec une solution gélifiante.
- immersion de chaque goutte dans une solution gélifiante contenant un réactif apte à réagir avec l'électrolyte du film.

Les capsules obtenues contiennent un coeur liquide et une surface externe gélifiée. Or, de telles capsules sont fragiles (faible tenue mécanique dans le temps). De plus, elles ont un taux d'humidité élevé (typiquement supérieur à 80%m) et ne peuvent donc pas permettre d'obtenir un bon rendement énergétique dans un réacteur de gazéification type réacteur à flux entraîné (RFE).

De plus, les billes produites par ce procédé sont de tailles submillimétriques (taille des particules inférieures à 500 µm). Une étape de séchage de ces billes implique une réduction de taille de particule (effet synérèses des gels), qui peut devenir inférieure à 200 µm, ceci n'est pas adapté à une installation de gazéification, type RFE.

Finalement, un tel procédé est un procédé de fabrication en batch, et le bain de gélification n'est pas recyclable, ce qui complique la production à l'échelle industrielle.

### EXPOSÉ DE L'INVENTION

Un but de la présente invention est de proposer un procédé de traitement de la biomasse conduisant à la formation de billes de biomasse ayant des dimensions adaptées pour une mise en oeuvre dans un procédé de gazéification et conduisant à un bon rendement de gazéification, le procédé devant être simple à mettre en oeuvre, peu coûteux et avec un impact faible, voire nul, sur l'environnement, y compris dans le cadre d'une mise en oeuvre à une échelle industrielle.

Pour cela, la présente invention propose un procédé de traitement de la biomasse pour fabriquer des billes de biomasse adaptées pour une mise en oeuvre dans un procédé de gazéification, le procédé comprenant les étapes suivantes :
a) fournir une première solution contenant des algues et des carbonates, la première solution étant de préférence à une température comprise entre 30°C et 60°C, encore plus préférentiellement entre 30°C et 50°C moyennant quoi de l'alginate est formé,
b) ajouter une poudre de biomasse à la première solution, moyennant quoi on forme une deuxième solution, la taille des particules de la poudre de biomasse étant de préférence inférieure à 1000 µm, et encore plus préférentiellement inférieure à 200 µm,
c) ajouter goutte à goutte, par exemple au moyen d'un buse d'injection ayant de préférence un orifice de sortie de 1 mm à 20 mm de diamètre, la deuxième solution à un bain de coagulation ionotropique comprenant des ions divalents, moyennant quoi on forme des billes de biomasse adaptées pour une mise en oeuvre dans un procédé de gazéification.

L'invention se différencie de l'art antérieur notamment par l'utilisation d'algues pour valoriser la biomasse. Les algues permettent de former de l'alginate lors de l'étape a).

L'alginate est un polysaccharide naturel obtenu à partir d'algues. L'alginate possède la particularité de former instantanément un hydrogel en présence d'ions multivalents, et notamment divalents. Les groupes carboxyles de l'alginate ont la propriété de chélater les ions divalents de charge opposée (par exemple Ca²⁺), conduisant à la formation de réseaux tridimensionnels rigides. On parle d'hydrogel "ionotropique".

Par hydrogel, on entend un réseau polymérique hydrophile pouvant absorber jusqu'à plusieurs milliers de fois sa masse sèche en eau.

Ainsi, lorsque l'alginate présent dans la deuxième solution à l'étape b) entre en contact avec les ions divalents du bain ionotropique, un hydrogel ionotropique. L'injection, réalisée au goutte à goutte dans le bain de coagulation ionotropique, conduit à la formation de billes (aussi appelées sphères).

De préférence, les algues sont des algues brunes, éventuellement en mélange avec d'autres algues, les algues brunes représentant au moins 50% massique du mélange. Avantageusement, les algues brunes sont des algues *Sargassum*, des algues *Fucus vesiculosus* ou des algues *Laminaria.* Les autres algues peuvent être choisies parmi les algues vertes, les algues rouges et les microalgues. Les algues utilisées dans le procédé sont, de préférence, des algues dites invasives. Ainsi, le procédé permet de valoriser non seulement les particules de biomasse mais aussi les algues.

Selon une variante de réalisation avantageuse, le bain de coagulation ionotropique est une solution aqueuse de nitrate de calcium.

Selon une autre variante de réalisation avantageuse, le bain de coagulation ionotropique est une solution aqueuse de nitrate de calcium et de nitrate de potassium. L'ajout de nitrate de potassium dans le bain de coagulation améliore les effets catalytiques durant le procédé de gazéification en RFE, la thermo-conversion est améliorée.

Avantageusement, le bain de coagulation ionotropique a un pH compris entre 3 et 7.

Avantageusement, l'étape c) est réalisée au moyen d'une buse d'injection, ayant de préférence un orifice de sortie de 1 mm à 20 mm de diamètre. L'utilisation d'une buse diminue la largeur de la distribution granulométrique : il y a moins de réarrangements possibles entre les grains, une augmentation de la porosité et une diminution de la compaction. Ceci présente un intérêt pour la coulabilité, en diminuant les risques de voutage/blocage.

Avantageusement, lors de l'étape a), la première solution comprend des carbonates, notamment des carbonates de métal alcalin, de préférence des carbonates de sodium, et éventuellement des propionates, de préférence des propionates de sodium. L'utilisation de propionates améliore la conservation des billes dans le temps.

Avantageusement, le rapport massique algues / biomasse de la suspension colloïdale est compris entre 0,01%m et 50%m, de préférence entre 1%m et 10%m, par exemple 1%m.

Avantageusement, le procédé comporte une étape d) ultérieure au cours de laquelle on sèche les billes de biomasse, par exemple avec de l'air pulsé, de préférence à une température comprise entre 0°C et 30°C. Cette étape est particulièrement avantageuse lorsque les billes sont utilisées dans un procédé de gazéification en voie sèche.

Selon une variante de réalisation, la deuxième solution obtenue à l'étape b) comprend des métaux divalents, de préférence, sous forme ionique (par exemple des ions cuivre, des ions nickel, des ions zinc ou un de leurs mélanges). Les billes ainsi obtenues peuvent être calcinées pour former des nanoparticules de métaux, pouvant être utilisées comme catalyseurs dans différents procédés.

Selon une autre variante de réalisation, la deuxième solution obtenue à l'étape b) comprend des sels inorganiques, provenant par exemple d'un réacteur hydrothermal de séparation des sels en eau supercritique. Les billes obtenues peuvent être utilisées en tant qu'engrais naturel.

Avantageusement, le procédé est réalisé en continu :
- l'étape a) est réalisée dans un premier réacteur, la biomasse étant préparée et/ou stockée dans un deuxième réacteur,
- l'étape b) est réalisée dans un réservoir de mélange, en communication fluidique avec une buse d'injection disposée en regard d'une cuve contenant le bain ionotropique,
- l'étape c) de formation des billes de biomasse est réalisée dans la cuve contenant le bain ionotropique.

La cuve est munie d'une sortie disposée en regard d'un élément muni d'une multitude d'ouvertures, configuré pour évacuer les billes vers un dispositif de séchage et permettant de récupérer à travers les ouvertures une phase liquide, la phase liquide étant avantageusement réinjectée dans la cuve.

La cuve est avantageusement munie d'une sonde pH.

Ce procédé en continu est simple à mettre en oeuvre et les différents éléments de l'installation sont faciles d'utilisation. Tout le procédé peut être réalisé à température ambiante (typiquement à une température entre 20°C et 25°C) et à pression ambiante (typiquement à une pression de 1bar soit 10⁵ Pa). Il n'est pas nécessaire d'avoir des équipements coûteux, comme un bain de cryogénisation.

Le procédé présente de nombreux avantages, et notamment un ou plusieurs des avantages suivants :
- la poudre fine de biomasse est distribuée de manière homogène au sein des billes,
- obtenir des billes de taille micrométrique (typiquement supérieures à 50 µm et de préférence supérieures à 200 µm) et de préférence de taille millimétrique, ce qui limite les problèmes liés à la manutention et au convoyage de poudres fines : blocages, risques sanitaires (notamment cancers associés aux poudres de bois ou risque de maladies d'Alzheimer et/ou pulmonaires) et ATEX (risque d'explosion lié aux poudres...),
- produire des billes rigides, ce qui améliore leur coulabilité et facilite donc leur convoyage et injection dans un réacteur de gazéification, tel qu'un réacteur à flux entraîné,
- diminuer la distribution de taille et modifier l'état de surface des billes : les billes sont plus lisses, et il y a moins de réarrangements entre les billes, ce qui diminue le frottement poudre-poudre et poudre-paroi, évitant ainsi les blocages/voutes/consolidations,
- obtenir des billes avec un rapport d'aspect proche de 1 (obtention de billes sphériques), ce qui réduit les problèmes de convoyage,
- modifier les mécanismes d'interactions particulaires (forces électrostatiques, forces de Van der Walls...) dépendants de la taille des particules ; ce qui conduit à une amélioration de la coulabilité des particules fines,
- l'agglomération des billes ne nécessite aucune intervention extérieure (le phénomène se produit seul) et la dépense énergétique liée à cette agglomération est nulle,
- ne pas avoir de consolidation forte au sein des billes, ce qui facilite le délitage en réacteur :
   la bille peut se détruire facilement en RFE où les temps de séjour sont courts car les particules ne sont pas fortement compactées,
- les propriétés des particules ne sont pas modifiées par le mécanisme d'agglomération et une fois libérées elles ont le même comportement en gazéification que si elles n'avaient pas été agglomérées en billes,
- avoir un liant qui se volatilise facilement en réacteur : la bille peut se déliter sur quelques secondes en RFE et les particules fines sont libérées et gazéifiées,
- avoir un lien qui favorise la pénétration des gaz réactifs pendant la gazéification, ce qui augmente les cinétiques de gazéification,
- pouvoir valoriser des poussières et autres déchets carbonés de taille fine de l'industrie (ex : poussières collectées dans les cyclones).

L'invention concerne également des billes de biomasse adaptées à une mise en oeuvre dans un procédé de gazéification. Les billes de biomasse, obtenues à partir du procédé précédemment décrit, sont rigides. La biomasse est par exemple des noyaux d'olives.

Les billes comprennent un mélange homogène d'algues et de biomasse, les algues étant de préférence des algues brunes ou un mélange d'algues contenant au moins 50% massique d'algues brunes.

Avantageusement, les billes contiennent en outre un catalyseur ou des sels inorganiques. Le catalyseur est, de préférence, un métal divalent, par exemple du nickel, du cuivre ou du zinc. Le catalyseur peut également être formé d'un mélange de ces métaux divalents. Avantageusement, les billes de biomasse comprennent un mélange homogène d'alginate et de biomasse.

La composition des billes est homogène en surface et en volume. Les billes obtenues n'ont pas une structure coeur/coquille. L'alginate et la poudre de biomasse se retrouve dans tout le volume de la bille.

Les billes peuvent contenir en outre des espèces inorganiques (du calcium et, de préférence, du potassium) favorisant la cinétique de gazéification par effet catalytique.

Avantageusement, le rapport d'aspect des billes est proche de 1 (forme quasi parfaitement sphérique). Ceci réduit considérablement les problèmes de convoyage dus à l'interaction entre les billes du fait de leur morphologie (aspérités favorisant les accrochages mais aussi possibilités de réarrangements de grains dans les interstices).

Avantageusement, les billes ont un diamètre compris entre 1 mm et 20 mm.

Cette granulation par voie humide conduit à la formation de billes de distribution de tailles homogène et de diamètre calibré. Les billes sont formées d'un mélange homogène d'algues et de biomasse (en surface et en volume).

De telles billes sont faciles à convoyer et à injecter dans les réacteurs de gazéification (notamment des réacteurs de gazéification à flux entraîné aussi appelés RFE). Les fines particules sont ainsi valorisées.

De telles billes permettent le dosage et la coulabilité des poudres dans un réacteur de gazéification, ce qui contribue à une amélioration de la gestion technique du procédé et à une meilleure conversion/valorisation de la biomasse.

L'invention concerne également l'utilisation de billes de biomasse, telles que définies précédemment, par exemple des billes comprenant une poudre de noyaux d'olives.

Les billes peuvent être utilisées en tant que produits adsorbants mis en oeuvre dans le traitement d'effluents liquides ou gazeux. Les billes forment un média filtrant pour l'adsorption de polluants.

Par exemple, elles peuvent servir pour traiter les eaux usées. Elles peuvent servir dans des colonnes d'adsorption des polluants pour traiter/dépurer les eaux en amont du procédé de culture des microalgues (ex. spiruline, chlorelle vulgaris, etc.).

Une augmentation de la porosité du lit peut favoriser l'interaction entre le fluide à traiter et le média filtrant. Si les particules sont trop imbriquées, il y a un risque que le fluide ne circule pas correctement dans le média filtrant.

Les billes obtenues peuvent être utilisées dans des chaudières à combustion.

Les billes obtenues, lorsqu'elles contiennent des éléments catalytiques en plus de la biomasse et des algues, peuvent être calcinées pour obtenir des nanoparticules utilisées en tant que catalyseur.

Les billes obtenues peuvent également être utilisées en tant qu'engrais si elles contiennent des sels inorganiques (contenant du phosphore, potassium et composants azotés). Il peut s'agir de sels obtenus en conditions d'eau sub-critique ou en conditions d'eau supercritique (i.e. température de 200°C à 1000°C, par exemple 400°C, et pression de 50 bar à 1000 bar, par exemple 250 bar), c'est-à-dire des sels précipités provenant d'un autre procédé. L'invention concerne également un procédé de gazéification comprenant une étape au cours de laquelle on gazéifie des billes de biomasse telles que définies précédemment, dans un réacteur de gazéification, notamment un réacteur de gazéification à flux entraîné.

Les billes de biomasse peuvent être brutes, torréfiées, pyrolysées ou carbonisées.

L'utilisation de telles billes facilite la mise en oeuvre du procédé de gazéification (et notamment des étapes de convoyage et d'injection) par rapport à des procédés utilisant des poudres fines de biomasse ou des pâtes de biomasse et augmente ainsi la rentabilité du procédé de gazéification.

Il permet de gazéifier des poudres fines de biomasse (taille des particules <200 µm) transformées en billes de biomasse (taille comprise par exemple entre 200 µm et 3 mm) et d'augmenter ainsi la rentabilité puisque toutes les poudres peuvent être gazéifiées.

Le liant naturel issu lui-même de la biomasse se volatilise facilement en réacteur : la bille peut se déliter sur quelques secondes en RFE et les particules fines sont libérées et gazéifiées ; le liant peut participer lui-même au rendement de la gazéification.

De plus, l'alginate peut avoir un impact sur la morphologie et la structure de la paroi des billes formées, pouvant favoriser la pénétration des gaz réactifs pendant la gazéification. Les billes peuvent contenir des catalyseurs, ce qui améliore les rendements dans des réacteurs de thermo-conversion.

Avantageusement, les billes contiennent moins de soufre en proportion par rapport à la poudre brute de biomasse, ce qui réduit les phénomènes d'empoisonnement des catalyseurs lors de la gazéification.

D'autres caractéristiques et avantages de l'invention ressortiront du complément de description qui suit.

Il va de soi que ce complément de description n'est donné qu'à titre d'illustration de l'objet de l'invention et ne doit en aucun cas être interprété comme une limitation de cet objet.

### BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :
La figure 1 représente un protocole de fabrication de billes de biomasse selon un mode de réalisation particulier de l'invention.
La figure 2 représente de manière schématique une ligne pilote de production des billes en continu (capacité : 100 kg/h), selon un autre mode de réalisation particulier de l'invention.
La figure 3 est un cliché photographique représentant une poudre de biochar de noyaux d'olives.
La figure 4 est un cliché photographique représentant des billes de biomasse humides produites à partir de macro-algues et d'une poudre de noyaux d'olives torréfiée à 350°C, selon un autre mode de réalisation particulier de l'invention.
La figure 5 est un cliché photographique représentant les billes de la figure 4, après séchage.
La figure 6 est un cliché photographique représentant des billes obtenues à partir de la poudre de biochar de noyaux d'olives de la figure 4 et de catalyseurs, selon un mode de réalisation particulier de l'invention.
La figure 7 est un cliché photographique représentant des billes obtenues à partir de boues de station d'épuration, selon un mode de réalisation particulier de l'invention.
La figure 8 est un cliché photographique représentant des billes obtenues à partir de sels de boues de station d'épuration, selon un mode de réalisation particulier de l'invention.
Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

En outre, dans la description ci-après, des termes qui dépendent de l'orientation, tels que « dessus », « dessous », etc. d'un dispositif s'appliquent en considérant que la structure est orientée de la façon illustrée sur les figures.

### EXPOSÉ DÉTAILLÉ DE MODES DE RÉALISATION PARTICULIERS

Par la suite, même si la description fait particulièrement référence à la biomasse issue de l'industrie agricole et des déchets issus des stations d'épuration, l'invention est transposable à tout matériau (homogène ou inhomogène) d'origine végétale et/ou animale contenant du carbone. Par exemple, il peut s'agir de déchets forestiers, de déchets alimentaires, de déchets ménagers, de déchets agricoles, des micro-plastiques, des nanoparticules, des particules fines issues des procédés industriels, de noir de carbone, de déchets de pneus, de déchets d'os d'animaux, etc.

La biomasse peut également faire référence à de la biomasse traitée par différents procédés de thermo-conversion, tels que par exemple la torréfaction, la pyrolyse, la carbonisation hydrothermale, la liquéfaction et gazéification hydrothermale et/ou résidus carbonés. Par exemple, le terme biomasse fait également référence aux biochars (pyrolyse), biocoals (torréfaction), hydrochars (carbonisation hydrothermale) et chars (gazéification).

Toutes ces ressources peuvent être sèches ou humides.

L'invention est intéressante pour récupérer des poussières et autres déchets de petites dimensions (typiquement des particules de dimensions inférieures à 1000 µm, et de préférence inférieures à 200 µm), faciliter leur stockage et leur évacuation (ex : bain de trempe ou cyclone en réacteur de gazéification, scieries etc...).

Le procédé de valorisation de la biomasse consiste à préparer des particules valorisables à partir, d'une part, d'une poudre fine de biomasse (taille des particules inférieure à 1000 µm, par exemple 200 µm) et, d'autre part, d'algues.

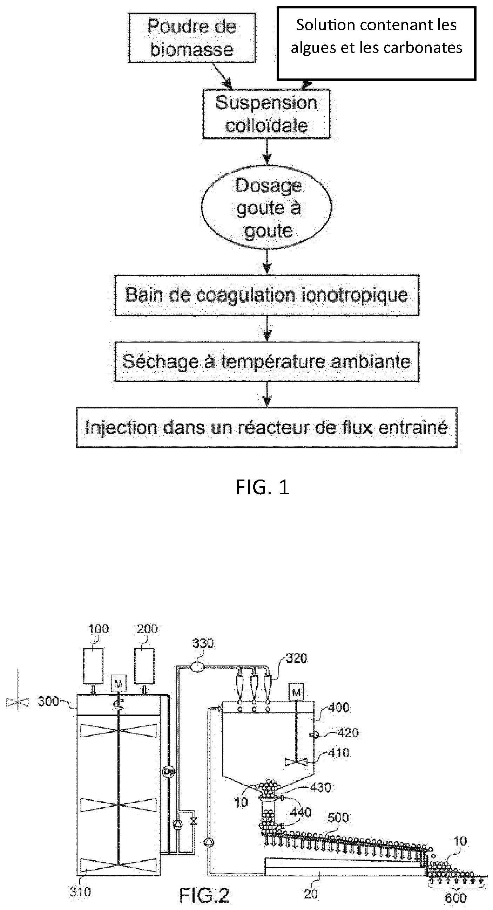

Le procédé de traitement de la biomasse comprend les étapes suivantes (figure 1) :
a) fournir une première solution contenant des algues et des carbonates,
b) ajouter une poudre de biomasse à la première solution, moyennant quoi on forme une deuxième solution,
c) ajouter goutte à goutte, la deuxième solution à un bain de coagulation ionotropique comprenant des ions divalents, moyennant quoi on forme des billes de biomasse adaptées pour une mise en oeuvre dans un procédé de gazéification.

La première solution comprend des algues et des carbonates.

Les algues peuvent être des algues brunes, des algues vertes, des algues rouges ou des microalgues. Il peut également s'agir d'un mélange de deux ou plusieurs types de ces différentes algues. Par exemple, il est possible de mélanger des algues brunes et des algues rouges ou encore de mélanger des algues brunes, des algues rouges et des microalgues. Par exemple, les algues brunes sont choisies parmi les algues Sargassum (aussi appelées Sargasse), les algues Fucus vesiculosus (aussi appelé *Fucus Vésiculeux*), les algues *Laminaria*, etc. Par exemple, les algues vertes sont choisies parmi les algues *Caulerpa taxifolia* et les algues *Codium tomentosum.* Par exemple, les algues rouges choisies parmi les algues *Erythrotrichia foliiformis* et les algues *Rhodella.* Par exemple, les micro-algues (aussi appelées microphytes ou algues microscopiques) sont choisies parmi la *Spiruline* et les algues *Chlorella vulgaris.*

De préférence, les algues sont des algues brunes. Il peut également s'agir d'un mélange d'algues brunes et d'un ou plusieurs autres types d'algues. De préférence, les algues brunes représentent au moins 50% massique du mélange. L'utilisation d'algues brunes est particulièrement avantageuse, car elle assure une forte teneur en acide mannuronique et en acide guluronique, nécessaires à la formation de l'alginate.

Les algues sont de préférence broyées afin de faciliter l'extraction de l'alginate et la formation de billes de taille homogène et/ou de composition homogène lors de l'étape c). Les particules d'algues broyées ont de préférence une taille inférieure à 200 µm. La taille des particules est par exemple comprise entre 10 µm et 200 µm.

La première solution est de préférence chauffée afin de faciliter la formation de l'alginate. La première solution comprend également des carbonates et notamment des carbonates de métal alcalin. De préférence, il s'agit de carbonates de sodium. La première solution peut en outre comprendre des propionates, par exemple des propionates de sodium.

La première solution est de préférence, à une température comprise entre 30°C et 60°C, de préférence entre 30°C et 50°C. Par exemple, elle est à 45°C. De telles températures favorisent la libération de l'alginate des algues.

La première solution forme ainsi une solution d'alginate, de préférence une solution d'alginate de sodium. La teneur massique en algue dans la première solution est, par exemple, comprise entre 0,01%m et 50%m, de préférence entre 1%m et 10%m.

Le rapport massique carbonate de sodium/algue est par exemple compris entre 1:1 et 1 :100, de préférence entre 1 :5 et 1 :10.

La poudre de biomasse fournie à l'étape b) comprend des particules de biomasse. La taille des particules est de préférence inférieure à 1000 µm, encore plus préférentiellement inférieure à 200 µm. La taille des particules est par exemple comprise entre 1 nm et 1000 µm, de préférence entre 10 nm et 200 µm et encore plus préférentiellement entre 20 µm et 50 µm.

Selon une première variante avantageuse, la poudre de biomasse est une poudre de noyaux d'olives, éventuellement torréfiée.

Selon une autre variante avantageuse, la poudre de biomasse est formée de boues de station d'épuration (aussi appelée boue STEP).

L'étape b) est par exemple réalisée sous agitation magnétique. La vitesse de rotation du mélange ainsi que la durée du mélange seront choisies par l'homme du métier. L'étape b) est réalisée jusqu'à obtenir un mélange homogène. Une deuxième solution est ainsi obtenue. Cette solution forme une suspension colloïdale.

Lors de l'étape c), la deuxième solution est injectée dans un bain de coagulation ionotropique (aussi appelé bain de sphérification). Le bain de coagulation ionotropique est une solution aqueuse. La solution contient des ions multivalents (de préférence des ions divalents) pouvant réagir avec l'alginate pour former un polymère. Par exemple, il peut s'agir d'ions cuivre, cadmium, baryum, calcium, cobalt, nickel, fer, zinc ou manganèse. On choisira de préférence des ions calcium. Ces ions ne sont pas toxiques et leur utilisation ne nécessite pas d'étape de purification additionnelle par rapport à d'autres ions.

Le bain de coagulation ionotropique est, par exemple, une solution de chlorure de calcium et/ou de nitrate de calcium.

Selon une autre variante de réalisation préférentielle, le bain de coagulation ionotropique contient à la fois des ions calcium et des ions potassium. Les ions potassium ont la propriété de catalyser la réaction de gazéification.

Le bain de coagulation est, par exemple, une solution de nitrate d'ions divalents et/ou de chlorure d'ions divalents. Différents nitrates d'ions divalents et/ou différents chlorure d'ions divalents peuvent être utilisés dans une même solution.

Avantageusement, on choisira une solution comprenant un ou plusieurs nitrates d'ions divalents. De nombreux ions peuvent être associés aux nitrates.

De préférence, le bain de coagulation ionotropique est une solution aqueuse de nitrate de calcium, pouvant en outre comprendre du nitrate de potassium.

De préférence, le bain de coagulation ionotropique a un pH compris entre 3 et 7. On choisira par exemple un pH de 4.

Le bain ionotropique peut également comprendre des substances pour donner des propriétés particulières aux billes, par exemple des colorants, des agents inhibiteurs et/ou accélérateurs de flammes, etc.

Le bain ionotropique peut contenir des espèces chélatant les ions multivalents et notamment les ions calcium.

Le rapport massique alginate / biomasse de la suspension colloïdale est, de préférence, compris entre 0,01%m et 50%m, de préférence entre 1%m et 10%m, par exemple 1%m. L'étape c) est réalisée au moyen d'une buse d'injection, ayant de préférence un orifice de sortie de 1 mm à 20 mm de diamètre. On choisira par exemple un diamètre de 3 mm. L'étape d) de séchage est avantageusement réalisée à l'air à une température comprise entre 0°C et 30°C et de préférence à la température ambiante (de 20°C à 30°C typiquement). Il n'y a aucun apport d'énergie. De l'air pulsé peut être utilisé. Par exemple, des billes humides de 3 mm de diamètre ont un diamètre de 1,45 mm après séchage.

Avantageusement, tout le procédé est réalisé à température ambiante.

Selon un mode de réalisation particulièrement avantageux, le procédé est réalisé en continu. Par exemple, le procédé en continu est réalisé grâce à la ligne de production de billes de biomasse représentée sur la figure 2. Une telle installation permet d'obtenir jusqu'à 100 kg/h de billes.

L'étape a) est réalisée dans un premier réacteur 100.

Le premier réacteur 100 est, par exemple, une cuve de volume 100 L. La cuve 100 peut être munie d'un agitateur, par exemple sous forme de pales, d'un capteur de niveau et/ou d'une sonde de température 120 et d'un système de chauffage 110 permettant de réguler la température, par exemple entre 20°C à 100°C. Au fond du premier réacteur 100, une grille peut être positionnée afin de retenir les grosses particules d'algues et/ou les cailloux et les grains de sable pouvant être présents dans les algues. Ceci évite un bouchage du système en aval. La grille a par exemple des orifices de 500 µm.

La poudre de biomasse est préparée et/ou stockée dans un deuxième réacteur 200.

Le premier réacteur et le deuxième réacteur sont en communication fluidique avec un réservoir de mélange 300, muni d'un mélangeur 310. L'étape b) est réalisée dans le réservoir de mélange 300.

Une pompe péristaltique à la sortie du premier réacteur 100 permet de contrôler la quantité d'algues acheminée dans le réservoir de mélange 300 (débit par exemple compris entre 0,1 m³/h et 1,0 m³/h).

Le réservoir de mélange 300 peut comprendre un agitateur (pales par exemple) et/ou un capteur de niveau. Pour ajuster en continu le dosage de la poudre de biomasse et la première solution d'algue, une balance peut être utilisée.

Le réservoir de mélange 300 est en communication fluidique avec une ou plusieurs buses d'injection 320 disposées en regard d'une cuve 400 contenant le bain de coagulation ionotropique. L'étape c) de formation des billes est réalisée dans la cuve 400.

Un débitmètre 330 peut servir à contrôler le débit au niveau de la ou des buses 320.

La cuve 400 est avantageusement munie d'un dispositif de mélange 410 et/ou d'une sonde pH 420. La sonde pH 420 permet notamment de déterminer si la quantité d'ions divalents est toujours suffisante.

La cuve 400 peut comprendre des piquages pour réaliser des prélèvements et assurer la surveillance de l'évolution du pH du bain de coagulation ionotropique. En effet, durant le procédé de formation des billes, la concentration des ions divalents diminue progressivement. Par exemple, si la concentration des ions divalents est inférieure d'au moins 80% à la concentration initiale du bain en ions divalents, l'ajout d'ions divalents sera réalisé. Les échantillons du bain sont prélevés, par exemple, régulièrement et analysés par chromatographie ionique.

Les billes 10 tombent par gravité au fond de la cuve 400.

Avantageusement, la cuve 400 est munie d'une sortie 430 disposée en regard d'un élément de récupération 500.

Par exemple, un système de double guillotine 440 disposé en bas de la cuve permet d'évacuer une fraction du volume de la cuve 400 formée d'une phase liquide 20 et d'une phase solide (billes 10).

Alternativement, la cuve du bain ionotropique peut posséder un système de recirculation en cascade ascendante (par exemple comportant deux étages), une pompe submersible et/ou un canal pour guider les billes formées dans l'étage supérieur vers un élément de récupération 500.

L'élément de récupération 500 est muni d'une multitude d'ouvertures. Les dimensions des ouvertures sont inférieures aux dimensions des billes 10. La phase liquide passe à travers les ouvertures. Les éléments solides (billes 10) sont acheminés par exemple jusqu'à un dispositif de séchage 600.

L'élément de récupération 500 peut être un plateau incliné ou un tapis roulant.

Le dispositif de séchage 600 fonctionne par exemple avec de l'air pulsé, par exemple à une température inférieure à 100°C. On choisira par exemple une température de 20°C.

La phase liquide 20 est, avantageusement, réinjectée dans la cuve 400.

Un récipient peut permettre de collecter et de stocker les billes.

De préférence, les billes ainsi obtenues comprennent un mélange homogène des différents éléments la constituant.

Les billes ont un diamètre compris entre 1 mm et 20 mm, par exemple 3 mm.

Le rapport d'aspect de la bille est avantageusement proche de 1.

Par « rapport d'aspect proche de 1 », on entend que le rapport entre la largeur et la hauteur (ou entre la plus grande dimension et la plus petite dimension) des billes formées par ce procédé est proche de 1, c'est-à-dire qu'il ne varie pas de plus 10% et de préférence il ne varie pas de plus de 5% par rapport à la valeur 1. Un rapport d'aspect proche de 1 signifie que les billes sont de forme sphérique.

Les billes obtenues sont des matériaux rigides, stables dans le temps (plusieurs années, par exemple entre 1 et 5 ans).

Les billes peuvent ensuite être valorisées dans un procédé de gazéification. Les poudres de biomasses peuvent être utilisées brutes ou torréfiées dans le procédé de gazéification.

Le procédé de gazéification peut être réalisé en continu dans une installation comprenant un réacteur de gazéification, par exemple à flux entraîné, et en amont de celui-ci une ligne de production de billes de biomasse destinée à mettre en oeuvre le procédé de traitement de la biomasse.

Alternativement, les billes peuvent être utilisées en tant que produits adsorbants mis en oeuvre dans différents traitements d'effluents liquides ou gazeux (comme par exemple élimination de H₂S issu du procédé de production du biométhane par digestion anaérobique). En particulier, il peut s'agir du traitement d'effluents aqueux, par exemple des eaux industrielles. Par exemple, les billes permettent d'adsorber tout ou une partie de certains éléments présents dans les effluents aqueux. A titre illustratif, on peut citer le plomb, le zinc ou encore le nickel. On peut également citer des procédés d'épuration d'eau destinés à supprimer les particules minérales contenues dans des eaux polluées. Après une première étape de suppression des particules par filtration ou centrifugation, les particules fines peuvent être avantageusement collectées puis éliminées par le procédé de l'invention.

Les eaux sont ainsi décontaminées/dépolluées.

Les billes peuvent également être utilisées en tant que catalyseur. Par exemple, quand les billes contiennent un catalyseur (par exemple du nickel, du cuivre, du zinc), elles peuvent être calcinées pour former des nanoparticules, par exemple des nanoparticules d'oxyde de nickel, d'oxyde de cuivre, d'oxyde de zinc, respectivement.

Elles peuvent également être utilisées en tant qu'engrais quand elles contiennent des sels inorganiques (par exemple du phosphore, du potassium et/ou des composants azotés).

### Exemples illustratifs et non limitatifs d'un mode de réalisation :

### Exemple 1: billes obtenues à partir d'extrait d'algues commercial et une poudre de noyaux d'olive torréfiée :

### Etape 1) : préparation de la solution S1

Dans un premier réacteur, une solution d'algues est préparée en mélangeant 1 kg d'algues finement broyés (taille de particule inférieure à 200 µm) et 9 kg d'eau.

La solution contient principalement des algues brunes (de type Sargasse).

Ensuite, 0,2 kg de carbonate de sodium et 0,05 kg de propionate de sodium sont ajoutés. L'agitation est une agitation mécanique à 300 tr/min pendant 2h.

La solution est chauffée à une température inférieure à 80°C, par exemple 45°C, pendant 8h.

### Etape 2) : ajout d'une poudre de biomasse à la solution S1

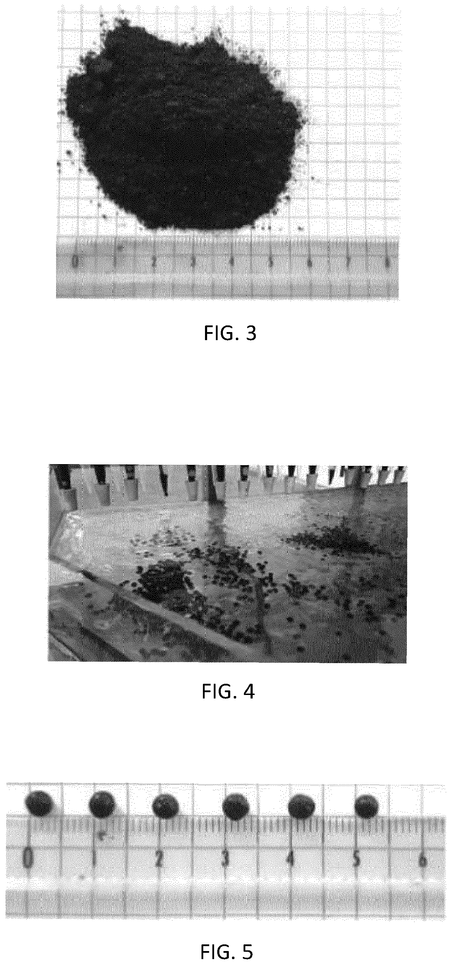

La poudre de biomasse est préparée dans un deuxième réacteur. Dans cet exemple, les particules de biomasse sont des particules de noyaux d'olives (taille des particules inférieures à 200 µm). Les particules ont été torréfiées à 350°C (figure 3).

De telles particules fines sont particulièrement difficiles à injecter dans un réacteur de gazéification à flux entraîné (RFE), du fait de leur faible coulabilité qui occasionne des problèmes techniques de convoyage et blocage dans tout le système.

La poudre de biomasse est ajoutée à la première solution dans un réacteur de mélange. Cette étape est réalisée, par gravité, ou à travers d'une pompe péristaltique (avec un débit par exemple de 0,1-1,0 m³/h). Une quantité de poudre de biomasse (1-100 kg) est mélangée avec la première solution d'algues (à 300 tr/min) pendant 2h pour former une solution colloïdale.

### Etape 3) : formation des billes dans le bain ionotropique

Un bain ionotropique contenant 10 kg de nitrate de calcium dissous dans 90 kg d'eau est préparé.

La solution colloïdale est dosée dans le bain de coagulation ionotropique par une pompe péristaltique (débit 0,1-1,0 m³/h).

A la sortie de la pompe, un système de buses (ici de diamètre 3 mm) a été installé, ce qui permet l'ajout des gouttes de taille régulière dans le bain ionotropique. Des billes sont obtenues (figure 4).

Le diamètre des billes souhaité peut être réglé et contrôlé en fonction du diamètre des buses (typiquement de 1 mm à 20 mm, de préférence 3 mm).

Les billes formées dans le bain ionotropique ont un temps de séjour supérieur à 10 secondes, et inférieur à 5 min (figure 4).

L'eau du bain ionotropique est recyclée dans le système à travers un mouvement de cascade ascendante et le pH est surveillé.

Le pH initial du bain est supérieur à pH 3.0 et inférieur à pH 7.0.

Durant le procédé de formation des billes, la concentration des ions calcium est surveillée par des prélèvements des échantillons réalisés toutes les 4h, et par des analyses par la technique de chromatographie ionique. Si, au cours du temps, la concentration des ions calcium diminue jusqu'à une valeur au moins 80% inférieure à la concentration initiale du bain, l'ajout de 10 kg de nitrate de calcium complémentaire est nécessaire.

Le diamètre moyen des billes à l'issue du procédé est de 3 mm. Toutefois, ce diamètre peut être réglé et calibré en fonction du diamètre des buses utilisées.

Puis, les billes sont collectées et séchées à l'air (à 22°C) pendant 5h à 10h. La figure 5 représente les billes après séchage.

Les résultats de caractérisation des billes et de la poudre de noyaux d'olives torréfiée sont présentés dans le tableau 1.

**[Tableau 1]**

| **Analyses élémentaires** | | | | | | **Taux de cendres (815 °C)** | **Pouvoir calorifique supérieur** |
|---|---|---|---|---|---|---|---|
| Biomasse | C (%) | H (%) | N (%) | S (%) | O (%) | (%) | (MJ kg⁻¹) |
| Poudre de noyaux d'olive torréfiée à 350°C | 76.3 | 4.43 | 0.36 | 0.015 | 16.8 | 2.1 | 29.84 |
| Extrait d'algues | 34.20 | 4.08 | 0.1 | <LD | 43.27 | 18.35 | 9.97 |
| Billes contenant la poudre de noyaux d'olive torréfiée | 48.98 | 4.29 | 0.01 | <LD | 37.7 | 8.95 | 18.76 |

Ce premier exemple confirme la faisabilité de production de billes à partir de biomasse et d'extrait d'algues.

### Exemple 2 : Billes obtenues à partir d'algues, d'une poudre de noyaux d'olive torréfiée et de catalyseurs :

Les algues sont formées d'un mélange de sargasse et de fucus vésiculeux. Pour cela, 100 mL de solution d'algue Sargasse ont été mélangés avec 300 mL d'algues Fucus vésiculeux et agités mécaniquement (chaque solution d'algue a été préparée selon l'étape a) du procédé, en ajoutant du carbonate de sodium). Puis 1 g de carbonate de potassium a également été ajouté dans le mélange des solutions d'algues, pour augmenter l'effet catalytique du matériau final.

Dans ce mélange, les éléments suivants ont ensuite été ajoutés : 3 g de la poudre de noyaux d'olive (taille de particule inférieure à 200 µm) et 1 g d'oxyde de cuivre.

Le mélange obtenu a été agité mécaniquement pendant 1h pour homogénéiser la suspension colloïdale.

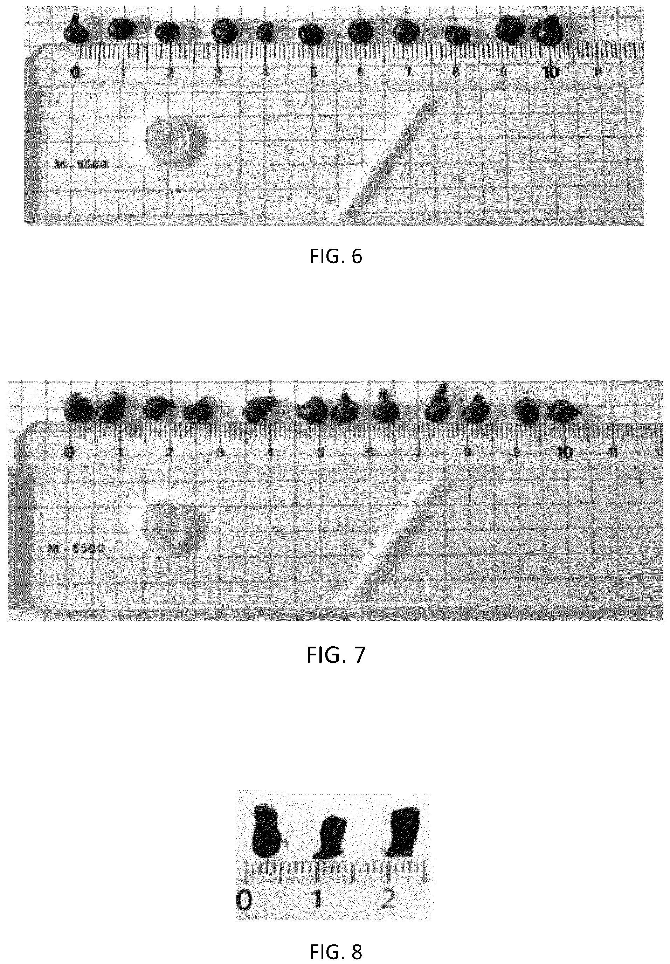

Le bain ionotropique (500 g) a été préparé à partir de 20 g de nitrate de calcium et de 480 g d'eau déminéralisée. La solution colloïdale a été dosée goutte à goutte. Les billes obtenues sont représentées dans la figure 6. Elles ont été caractérisées. Les résultats sont présentés dans le tableau 2 ci-après.

**[Tableau 2]**

| **Analyses élémentaires** | | | | | | **Taux de cendres (815°C)** | **Pouvoir calorifique supérieur** |
|---|---|---|---|---|---|---|---|
| Biomasse | C (%) | H (%) | N (%) | S (%) | O (%) | (%) | (MJ kg⁻¹) |
| Algues Sargasse | 33.04 | 4.67 | 3.94 | 1.27 | 35.52 | 21.56 | 12.59 |
| Algues Fucus *vesiculosus* | 36.07 | 4.77 | 3.46 | 1.77 | 36.63 | 17.30 | 14.35 |
| Billes contenant la poudre de noyaux d'olive torréfiée et les catalyseurs | 28.05 | 3.12 | 6.54 | 0.89 | 43.88 | 17.52 | 9.40 |

### Exemple 3 : Billes obtenues à partir d'algues et d'une boue de station d'épuration (boue de STEP)

La première solution contenant les algues (sargasse et fucus vésiculeux) et le carbonate de sodium a été préparée comme dans l'exemple 2.

A ce mélange, 10 g de boue de STEP (contenant 50%m de matière sèche) ont été ajoutés. Le mélange d'algues contenant la boue de STEP a été agité mécaniquement pendant 1h pour homogénéiser la suspension colloïdale.

Le bain ionotropique a été préparé comme dans l'exemple 2.

Le mélange d'algues et boue de STEP a été dosé goutte à goutte comme décrit dans l'exemple 1. Les billes obtenues sont représentées sur la figure 7. Elles ont été caractérisées. Les résultats sont présentés dans le tableau 3 ci-après.

**[Tableau 3]**

| **Analyses élémentaires** | | | | | | **Taux de cendres (815 °C)** | **Pouvoir calorifique supérieur** |
|---|---|---|---|---|---|---|---|
| Biomasse | C (%) | H (%) | N (%) | S (%) | O (%) | (%) | ( MJ kg⁻¹) |
| Algues Sargasse | 33.04 | 4.67 | 3.94 | 1.27 | 35.52 | 21.56 | 12.59 |
| Algues Fucus *vesiculosus* | 36.07 | 4.77 | 3.46 | 1.77 | 36.63 | 17.30 | 14.35 |
| Billes contenant la boue de STEP | 25.16 | 3.69 | 6.58 | 1.00 | 38.48 | 25.09 | 9.65 |

### Exemple 4 : Billes obtenues à partir d'algues contenant des engrais (sels obtenus à partir de la boue de STEP en conditions d'eau supercritique)

La séparation des sels de la boue de STEP a été réalisée en conditions d'eau supercritique autour de 400°C et 250 bar de pression. Ces sels inorganiques sous forme de nano et microparticules ont été utilisés pour la fabrication des billes et leur possible utilisation comme engrais pour la fertilisation des sols.

La composition des sels obtenus est présentée dans le tableau 4 ci-après.

**[Tableau 4]**

| **Analyse** | **Unit** | **Concentration** |
|---|---|---|
| C | %m sur sec | 6.0 |
| H | %m sur sec | 0.51 |
| N | %m sur sec | 0.45 |
| S | %m sur sec | |
| Aluminium total | mg/kg sec | 38137 |
| Silicium total | mg/kg sec | 77862 |
| Fer total | mg/kg sec | 52178 |
| Manganèse total | mg/kg sec | 737 |
| Magnésium total | mg/kg sec | 13823 |
| Potassium total | mg/kg sec | 11818 |
| Phosphore total | mg/kg sec | 108359 |
| Sodium total | mg/kg sec | 5459 |
| Calcium total | mg/kg sec | 184370 |

La teneur en phosphates, potassium et azote de ces sels est très intéressante pour des applications d'amendement des sols. Leur mélange avec les algues contribue à augmenter la teneur totale en azote d'un facteur 10 (de 0.45%m sur sec à 5.66%m sur sec) facilitant ainsi la production d'un potentiel engrais formés de billes de dimension calibrée et facile à transporter. Les billes obtenues sont représentées sur la figure 8. Les résultats de caractérisation sont présentés dans le tableau 5 suivant.

**[Tableau 5]**

| **Analyses élémentaires** | | | | | | **Taux de cendres (815 °C)** | **Pouvoir calorifique supérieur** |
|---|---|---|---|---|---|---|---|
| Biomasse | C (%) | H (%) | N (%) | S (%) | O (%) | (%) | ( MJ kg⁻¹) |
| Algues Sargasse | 33.04 | 4.67 | 3.94 | 1.27 | 35.52 | 21.56 | 12.59 |
| Algues Fucus *vesiculosus* | 36.07 | 4.77 | 3.46 | 1.77 | 36.63 | 17.30 | 14.35 |
| Billes contenant les sels de boue de STEP | 22.64 | 3.73 | 5.66 | 0.83 | 39.52 | 27.62 | 9.52 |

Les billes humides ont été séchées à l'air (sans aucun apport d'énergie au système). La taille des billes sèches est de 1.6 mm soit deux fois inférieure à celle des billes humides.

## Revendications

1. Procédé de traitement de la biomasse pour fabriquer des billes de biomasse adaptées pour une mise en oeuvre dans un procédé de gazéification, le procédé comprenant les étapes suivantes :
a) fournir une première solution contenant des algues et des carbonates, la première solution étant de préférence à une température comprise entre 30°C et 60°C moyennant quoi de l'alginate est formé,
b) ajouter une poudre de biomasse à la première solution, moyennant quoi on forme une deuxième solution, la taille des particules de la poudre de biomasse étant de préférence inférieure à 1000 µm, et encore plus préférentiellement inférieure à 200 µm,
c) ajouter goutte à goutte, par exemple au moyen d'un buse d'injection ayant de préférence un orifice de sortie de 1 mm à 20 mm de diamètre, la deuxième solution à un bain de coagulation ionotropique comprenant des ions divalents, moyennant quoi on forme des billes de biomasse adaptées pour une mise en oeuvre dans un procédé de gazéification.

2. Procédé selon la revendication 1, **caractérisé en ce que** le bain de coagulation ionotropique est une solution aqueuse de nitrate de calcium ou une solution aqueuse de nitrate de calcium et de nitrate de potassium.

3. Procédé selon la revendication 1 ou 2, **caractérisé en ce que** les algues sont des algues brunes, éventuellement en mélange avec d'autres algues, les algues brunes représentant au moins 50% massique du mélange.

4. Procédé selon la revendication 3, **caractérisé en ce que** les algues brunes sont des algues *Sargassum*, des algues *Fucus vesiculosus* ou des algues *Laminaria.*

5. Procédé selon l'une quelconque des revendications précédentes, **caractérisé en ce que** lors de l'étape a), la première solution comprend des carbonates de sodium et éventuellement des propionates de sodium.

6. Procédé selon l'une quelconque des revendications précédentes, **caractérisé en ce que** la deuxième solution obtenue à l'étape b) comprend des ions cuivre, des ions nickel, des ions zinc ou des sels inorganiques.

7. Procédé selon l'une quelconque des revendications précédentes, **caractérisé en ce que** le procédé comporte une étape d) ultérieure au cours de laquelle on sèche les billes de biomasse, par exemple avec de l'air pulsé, de préférence à une température comprise entre 0°C et 30°C.

8. Procédé selon l'une quelconque des revendications précédentes, **caractérisé en ce que** le bain de coagulation ionotropique a un pH compris entre 3 et 7.

9. Procédé selon l'une quelconque des revendications précédentes, **caractérisé en ce que** le rapport massique algues / biomasse de la deuxième solution est compris entre 0,01%m et 50%m, de préférence entre 1%m et 10%m, par exemple 1%m.

10. Procédé selon l'une quelconque des revendications précédentes, **caractérisé en ce que** le procédé est réalisé en continu,
l'étape a) étant réalisée dans un premier réacteur (100),
la biomasse étant stockée dans un deuxième réacteur (200),
l'étape b) étant réalisée dans un réservoir de mélange (300), en communication fluidique avec une buse d'injection (320) disposée en regard d'une cuve (400) contenant le bain ionotropique,
l'étape c) de formation des billes de biomasse étant réalisée dans la cuve (400) contenant le bain ionotropique,
la cuve (400) étant avantageusement munie d'une sonde pH (420),
la cuve (400) étant munie d'une sortie (430) disposée en regard d'un élément (500) muni d'une multitude d'ouvertures, configuré pour évacuer les billes vers un dispositif de séchage (600) et permettant de récupérer à travers les ouvertures une phase liquide, la phase liquide étant avantageusement, réinjectée dans la cuve (400).

11. Bille de biomasse adaptée pour une mise en oeuvre dans un procédé de gazéification et obtenue selon le procédé selon l'une quelconque des revendications 1 à 10, comprenant un mélange homogène d'algues et de biomasse, les algues étant de préférence des algues brunes ou un mélange d'algues contenant au moins 50% massique d'algues brunes.

12. Bille de biomasse selon la revendication 11, **caractérisé en ce qu'**elle contient en outre un catalyseur, de préférence un métal divalent, tel que du nickel, du cuivre, du zinc, ou **en ce qu'**elle contient en outre des sels inorganiques.

13. Procédé de gazéification comprenant une étape au cours de laquelle on gazéifie des billes de biomasse telles que définies dans la revendication 11 ou 12, dans un réacteur de gazéification, notamment un réacteur de gazéification à flux entraîné.
